Europäisches Patentamt

(19) European Patent Office

Office européen des brevets

(11) Veröffentlichungsnummer: **0 142 721**
**B1**

(12) **EUROPÄISCHE PATENTSCHRIFT**

(45) Veröffentlichungstag der Patentschrift:
29.03.89

(51) Int. Cl.⁴: **A 01 B 19/06**

(21) Anmeldenummer: **84112639.4**

(22) Anmeldetag: **19.10.84**

(54) **Egge.**

(30) Priorität: 09.11.83 DE 3340456
27.06.84 DE 8419285 U

(43) Veröffentlichungstag der Anmeldung:
29.05.85 Patentblatt 85/22

(45) Bekanntmachung des Hinweises auf die Patenterteilung:
29.03.89 Patentblatt 89/13

(84) Benannte Vertragsstaaten:
AT BE CH DE FR GB IT LI LU NL SE

(56) Entgegenhaltungen:
CH-A-347 378
DE-A-2 159 651
DE-A-2 745 575
DE-A-3 038 046
FR-A-1 240 699
FR-A-2 284 260
FR-A-2 345 901
GB-A-646 318
GB-A-1 156 268
NL-A-6 501 462
NL-A-7 504 150
US-A-1 723 976
US-A-2 926 736

(73) Patentinhaber: **Müllers & Backhaus KG,**
**Heiderstrasse 22, D-5144 Wegberg- Arsbeck (DE)**

(72) Erfinder: **Backhaus, Josef, Heiderstrasse 22, D-5144**
**Wegberg- Arsbeck (DE)**

(74) Vertreter: **Liermann, Manfred, Josef- Schregel-**
**Strasse 19, D-5160 Düren (DE)**

## Beschreibung

Die Erfindung betrifft einen Eggenantrieb für eine mit einer fahrbaren einachsigen Antriebseinrichtung verbundenen Egge, welche im wesentlichen aus einem stationären Querträger und einem, im wesentlichen parallel zum Querträger gerichteten, quer zur Fortbewegungsrichtung der Egge hin- und herbeweglichen, angetriebenen und mit Eggenzähnen ausgerüsteten Eggenbalken besteht, wobei der Eggenbalken mit dem Querträger mittels mindestens zwei parallelen Hebeln schwingbar verbunden ist und wobei der Eggenbalken Mittel zur Kopplung mit einem Abtriebselement eines Schwingantriebes aufweist zur Erzeugung einer im wesentlichen quer zur Fortbewegungsrichtung verlaufenden Hin- und Herbewegung des Eggenbalkens.

Ein Eggenantrieb der eingangs genannten Art ist in der DE-A-3 038 046 beschrieben. Mit dieser Druckschrift ist eine Vorrichtung zur Bodenverarbeitung, insbesondere für Garten- und Parkanlagen bekannt geworden, bei der ein einachsiger Schlepper als Antriebselement benutzt wird, wobei dieser einachsige Schlepper an seiner Vorderseite einen Ausleger 14 als Abtriebsgehäuse eines Eggenantriebes aufweist, wobei dieses Abtriebsgehäuse an ebenfalls seiner Vorderseite ein Getriebegehäuse 15 aufweist, welches mit einem stationären Querbalken verbunden ist, der wiederum zwei einseitige Schwingarme trägt, mit denen ein Rechenquerbalken querschwingfähig gehalten ist. Eine Abtriebseinrichtung des innerhalb des Getriebegehäuses 15 angeordneten Getriebes sorgt für einen Schwingantrieb des Rechens. Als Getriebeelement zur Umwandlung der Drehbewegung in die Schwingbewegung des Eggenbalkens ist dort ein Kurbeltrieb mit vertikal angeordneter Kulisse vorgesehen. Die schmutzdichte Verkleidung des Kurbeltriebs ist jedoch schwierig und hält dem rauhen Betrieb nicht Stand. Ohne Verkleidung lagert sich Schmutz in der Kulisse des Kurbeltriebs ab. Hierdurch besteht die Gefahr des Bruches des Kurbelzapfens. Eine Verkleidung verteuert außerdem Reparaturarbeiten. Der bekannte Antrieb erzeugt außerdem Biegekräfte auf die Schwingarme senkrecht zur Schwingrichtung. Diese ungünstige Belastungsrichtung vermindert die Lebensdauer der Lager und mindert damit die Betriebssicherheit. Dieses Gerät ist somit unbefriedigend.

Der Erfindung liegt somit die Aufgabe zugrunde einen Eggenantrieb der eingangs beschriebenen Art vorzuschlagen, der betriebssicher und verschleißarm und dabei gleichzeitig reparaturfreundlich ist. Er soll die notwendige Betriebssicherheit auch bei schwerem Betrieb aufweisen.

Erfindungsgemäß ist diese Aufgabe bei einem Eggenantrieb der eingangs beschriebenen Art dadurch gelöst, daß der Schwingantrieb als an sich bekanntes Winkelgetriebe ausgebildet ist, dessen Eingangswelle von der Antriebseinrichtung angetrieben ist und dessen Abtriebswelle mindestens angenähert senkrecht zur Hauptrichtung der Schwingbewegung und der Fahrbewegung angeordnet ist und eine Kurbel aufweist, deren Kurbelzapfen zwischen zwei parallelen, sich in Fahrtrichtung erstreckenden Führungsflanschen zur Umwandlung der Drehbewegung des Kurbelzapfens in eine Hin- und Herbewegung angeordnet ist, wobei diese Führungsflanschen direkt oder über Zwischenelemente an einem Eggenbalken befestigt sind. Die Kurbelachse ist nunmehr vertikal angeordnet, so daß eine Gleitbewegung in mehreren Ebenen verhindert ist. Dies wird durch die Verwendung eines üblichen Winkelgetriebes erreicht. Die Abtriebswelle dieses üblichen Winkelgetriebes, das als für solche Einrichtungen konzipiertes, handelsübliches Bauteil verwendet werden kann, muß nur mit einer Kurbel ausgerüstet werden, die zwischen zwei Führungsflanschen anzuordnen ist, wobei diese Führungsflansche ihrerseits an einem zu bewegenden Eggenbalken befestigt sind. Hierbei können beliebige Befestigungsmittel für diese Führungsflansche gewählt werden. Der stationäre Teil der Egge kann hierbei entweder am Gehäuse des Ninkelgetriebes oder über zusätzliche Mittel an der Antriebseinrichtung befestigt sein. Ein solcher Antrieb ist ebenfalls zu verwenden für Doppeleggen. Er ist besonders einfach, weil handelsübliche Winkelgetriebe, die insbesondere bei solchen einachsigen Antriebseinrichtungen zum Antrieb von Bodenfräsen eingesetzt werden, verwendet werden können. Es ist lediglich erforderlich, diese Winkelgetriebe nicht in üblicher Weise, sondern um 90° um die Eingangswelle geschwenkt an die einachsige Antriebseinrichtung anzubauen. Natürlich ist es nicht zwingend erforderlich solche Winkelgetriebe, wie sie für den Antrieb von Bodenfräsen an solchen einachsigen Antriebseinrichtungen gebaut werden, zu verwenden. Es kann auch jedes andere, passend konzipierte Winkelgetriebe verwendet werden. Hierbei ist es auch nicht entscheidend, ob die Umlenkung der Drehbewegung über Kegelrad oder Tellerrad oder über zwei reine Kegelräder erfolgt. Es ist ebensogut eine Umlenkung über Schnecke und Schneckenrad oder über andere geeignete Getriebeelemente möglich. Solche Winkelgetriebekonstruktionen sind allgemein bekannt und müssen in ihren Abmessungen lediglich -sofern nicht bereits die hierauf abgestimmten Winkelgetriebe verwendet werden- an den Einsatzfall angepaßt werden. Getriebe dieser Art sind verschleißarm und wenig störanfällig. Der an der Abtriebsseite auf der Kurbel angeordnete Kurbelzapfen bewegt sich zwischen den ihm zugeordneten Führungsflanschen des beweglichen Eggenbalkens in nur einer Ebene und ist daher in seinem Verschleißverhalten gut beherrschbar. Hierbei wird der gesamte mechanische Aufbau der Egge und aller Antriebselemente auch dadurch günstig beeinflußt, daß die Einleitung der Kraft für die Hin- und Herbewegung des Eggenbalkens immer in der gleichen Höhenlage erfolgt, so daß unterschiedliche Beanspruchungen für die Hin- bzw. Herbewegung, wie sie von den bisher üblichen Antrieben erzwungen wurden, vermieden werden können. Die Einrichtung ist robust, schmutzunempfindlich und in jeder Schlosserei herzustellen und zu reparieren.

Eine Weiterentwicklung der Erfindung sieht vor, daß die Kurbel als Scheibe mit zentrischer Nabe und exzentrischem Kurbelzapfen ausgebildet ist. Hierdurch ist es möglich das eigentliche Verschleißelement, das im Betrieb der Schmutzbelastung ausgesetzt ist, äußerst einfach zu gestalten, so daß eine Reparatur oder Neuerstellung auch in einfach ausgerüsteten Werkstätten problemlos möglich ist.

Eine Ausgestaltung der Erfindung sieht vor, daß auf dem Kurbelzapfen ein Wälzlager angeordnet ist, dessen äußere Umfangsfläche mit den Führungsflanschen zusammenarbeitet. Die Verwendung eines solchen Wälzlagers ist insbesondere dann günstig wenn hierbei handelsübliche, abgedichtete Wälzlager verwendet werden. Es kann dann mit solchen Elementen die bei dieser Art von Antrieb üblicherweise auftretende Gleitreibung, der der Kulissenstein ausgesetzt war, völlig vermieden werden und es tritt nur noch eine Rollbewegung auf, die bedeutend verschleißärmer ist.

Eine weitere Ausgestaltung der Erfindung sieht vor, daß die Führungsflansche von den Schenkeln eines U-Profils gebildet werden, welches direkt oder über Zwischenelemente an einem Eggenbalken befestigt ist. Auch dies ist ein Bauelement mit dem der Gesamtaufwand für den Bau der Antriebselemente drastisch verringert werden kann. Es ist lediglich erforderlich ein handelsübliches Halbzeug-U-Profil auf eine geeignete Länge abzulängen und ggfls. die zwischen den Schenkeln vorhandene lichte Weite durch einen Zerspanungsvorgang an die Maße des Kurbelzapfens oder an die Durchmessermaße des verwendeten Wälzlagers anzupassen. Da solche Wälzlager auch bereits für den Einsatz als Rollen im Handel angeboten werden mit einer balligen äußeren Umfangfläche, kann die zerspanende Bearbeitung an den Schenkeln des U-Profils grob sein und es sind keine besonderen Anforderungen an die Parallelität dieser Flächen zur Kurbelachse gestellt. Auch müssen diese Flächen nicht fein bearbeitet sein, weil bei Verwendung eines Wälzlagers ja lediglich eine Rollbewegung auftritt.

Eine weitere Ausgestaltung der Erfindung sieht vor, daß das U-Profil über Zwischenelemente in seiner Höhenlage so auf einem Eggenbalken befestigt ist, daß mindestens bei normalem Eggenbetrieb das U-Profil oberhalb des bewegten Erdreichs liegt. Hierdurch sind die Bauelemente, die die Drehbewegung unmittelbar in die Hin- und Herbewegung umwandeln, im wesentlichen dem groben Schmutzbereich entzogen, wodurch der Verschleiß verringert werden kann.

Eine ergänzende Ausgestaltung der Erfindung sieht vor, daß das U-Profil an beiden Stirnseiten offen ist. Dies ist deswegen besonders vorteilhaft, weil unter dieser Voraussetzung selbst dann, wenn grober Schmutz in dieses U-Profil eingedrungen ist, während des Betriebs des Gerätes, der im U-Profil hin- und hergehende Kurbelzapfen bzw. das hin- und herrollende Wälzlager diesen Schmutz immer wieder ausschieben kann.

Es ist auch noch nach einer Ausgestaltung der Erfindung vorgeschlagen, daß an der Antriebseinrichtung eine Adapterplatte befestigt ist, auf der einerseits das Winkelgetriebe in Wirkverbindung mit der Antriebseinrichtung und andererseits ein Ausleger zur Befestigung des stationären Querträgers angeordnet ist. Hierdurch gelingt es einerseits das Winkelgetriebe in gewünschter Weise an der Antriebseinrichtung zu befestigen und andererseits über eine zusätzliche Befestigung die Egge unabhängig vom Gehäuse des Winkelgetriebes zu befestigen. Diese zusätzliche Befestigung unabhängig vom Gehäuse des Winkelgetriebes ermöglicht es den Eggenbalken so anzuordnen, daß eine Pendelbewegung um eine Längsachse, die in Vorschubrichtung gerichtet ist möglich wird, ohne daß diese Pendelbewegung vom Gehäuse des Winkelgetriebes oder von irgendwelchen anderen hierzugehörigen Bauteilen mitgemacht werden müßte. Die genannte Pendelbewegung der Egge andererseits ist erforderlich, um auch in unebenem Gelände optimal arbeiten zu können. Die Verwendung der Adapterplatte bietet zudem den weiteren Vorteil, bei Bedarf die gesamte Einrichtung in betriebsbereitem Zustand über die Adapterplatte von der einachsigen Antriebseinrichtung zu lösen oder diesen betriebsbereiten Bausatz über die Adapterplatte einfach an der einachsigen Antriebseinrichtung zu befestigen. Eine Montage oder Demontage der einzelnen Baugruppen kann dann entfallen.

Nach einer weiteren Ausgestaltung ist noch vorgeschlagen, daß ein Winkelgetriebe vorgesehen ist, bei dem Eingangswelle und Abtriebswelle einen von 90° abweichenden Winkel miteinander bilden. Auch eine Abwinklung abweichend von 90° eröffnet die Möglichkeit der günstigen Einleitung der Antriebsbewegung.

Weiterhin ist noch vorgesehen, daß die Führungsflansche in ihrer Lage parallel zur Vorschubrichtung und rechtwinklig zur Abtriebswelle angeordnet sind. Dies ist die verschleißärmste Anordnung.

Weiterhin ist noch ergänzend vorgeschlagen, daß der Ausleger als Führungsrohr ausgebildet ist, in welchem eine mit einem freien Ende am stationären Querträger befestigte Welle begrenzt drehbar und begrenzt axial verschiebbar gelagert ist, wobei eine Axialverschiebung in mindestens einer Richtung gegen eine Vorlast erfolgt. Die Art des Kurbelantriebs verursacht Axialkräfte, die aufgefangen werden müssen. Andererseits aber ist es auch wünschenswert, daß die gesamte Einrichtung an ihrem Ausleger leicht pendeln kann, um sich bestimmten Unebenheiten des zu bearbeitenden Bodens anzupassen. Die Begrenzung der Pendelbewegung und die Begrenzung einer möglichen Axialbewegung sollen von unterschiedlichen Bauelementen durchgeführt werden, um eine Zerstörung der jeweils begrenzenden Elemente zu verhindern. Erfolgt eine Axialverschiebung nur gegen eine Vorlast, so kann die Vorlast so bemessen werden, daß die vom Antrieb her über die Reibung zwischen Antriebselement und Abtriebselement erzeugte Axialkraft von der Vorlast vollkommen absorbiert wird, so daß trotz der Möglichkeit der begrenzten Pendelbewegung eine Axialbewegung überhaupt nicht auftritt. Sollte jedoch aus irgendeinem Grunde die Axialkraft unerwartet groß werden, so kann dennoch zur Verhinderung von Überbeanspruchung der verschiedenen miteinander zusammenwirkenden Bauelemente eine Axialverschiebung der tragenden Welle auftreten und damit eine Kraftbegrenzung erreicht werden.

Ergänzend ist noch vorgeschlagen, daß zur Erzeugung der Vorlast Federelemente vorgesehen sind. Dies sind bekannte, bewährte und robuste Bauelemente, die mit einfachsten Mitteln eingesetzt werden können und die sehr einfach, beispielsweise über eine Schraubenverbindung, auf die gewünschte Vorlast vorgespannt werden können.

Weiter ist noch vorgeschlagen, daß die zweite Richtung einer Axialverschiebung durch einen Anschlag auf der Welle begrenzt wird. Hierdurch wird mit einfachen Mitteln erreicht, daß über die Einstellung der Vorlast, beispielsweise über Federelemente, der Anschlag am Führungsrohr stets anliegt. In den Fällen, in denen mit einer Überbeanspruchung mindestens in der hierfür relevanten Richtung nicht zu rechnen ist, kann hierbei über die Einstellung der Vorlast evtl. über die eingesetzten Federelemente eine Axialverschiebung der tragenden Welle vollständig verhindert werden, wobei über die Vorlast das Gerät hinsichtlich der Axialkräfte an die Einsatzverhältnisse angepaßt werden kann.

Schließlich ist nach der Erfindung noch vorgeschlagen, daß ein weiterer Eggenbalken auf der dem ersten Eggenbalken gegenüberliegenden Seite des Querträgers vorgesehen ist, der mit den genannten parallelen Hebeln, die entsprechend über den Querträger hinausreichen, schwingbar verbunden ist, so daß die Schwingbewegung der Eggenbalken jeweils entgegengesetzt gerichtet ist. Hierdurch wird der erfindungsgemäße Antrieb auch für eine Doppelegge nutzbar gemacht, die wegen ihrer einfacheren Handhabung bevorzugt wird.

Die Erfindung soll nun anhand der beigefügten Zeichnungen, die ein Ausführungsbeispiel zeigen, näher erläutert werden.

Es zeigen:

Figur 1  Einachsige Antriebseinrichtung mit Winkelgetriebe und Egge in Vorderansicht,

Figur 2  Perspektivische Darstellung nach Figur 1,

Figur 3  Vergrößerte Ansicht der Bewegungsübertragungselemente in Ansicht nach Pfeil B der Figur 2,

Figur 4  Ansicht in Richtung des Pfeils A nach Figur 3,

Figur 5  vergrößerte Ansicht des Auslegers 33 nach Figur 6,

Figur 6  Ansicht in Richtung des Pfeils "C" nach Figur 5.

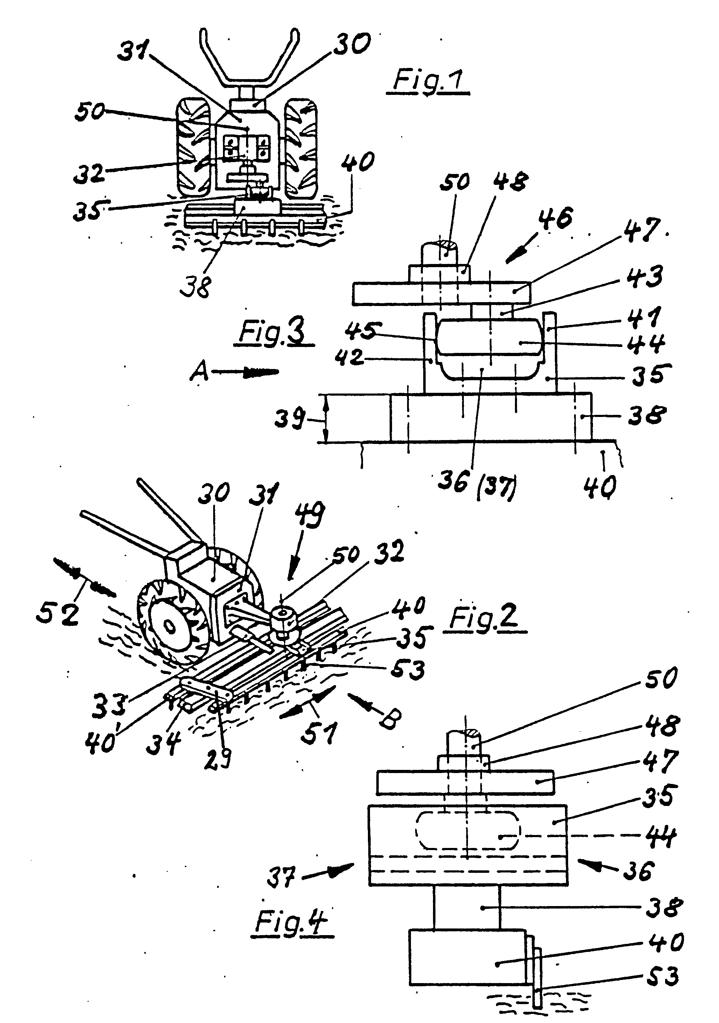

Eine Antriebseinrichtung 30 (Fig. 1), ausgebildet als üblicher einachsiger Schlepper, weist in üblicher Bauart neben dem Antrieb für die Antriebsräder der Antriebsachse noch eine z. B. in Vorschubrichtung weisende Antriebswelle für den Antrieb von an der Stirnseite anzubauende Arbeitsgeräte auf. An dieser Stirnseite der Antriebseinrichtung 30 ist eine Adapterplatte 31 befestigt mit einem Durchtritt für die hier nicht näher dargestellte, in Vorschubrichtung weisende Antriebswelle der Antriebseinrichtung 30. Die Adapterplatte 31 weist einen Ausleger 33 auf, an dessen zweitem Ende der stationäre Querträger 34 einer Doppelegge mit den Eggenbalken 40 und 40' befestigt ist, die mittels am stationären Querträger 34 schwenkbar gelagerter paralleler Hebel 29 gegensinnig und quer zur Vorschubrichtung 52 beweglich am stationären Querträger 34 gelagert und gehalten sind.

Ebenfalls an der Adapterplatte 31 befestigt und mit der nicht näher dargestellten Antriebswelle der Antriebseinrichtung 30 in Wirkverbindung stehend, ist ein Winkelgetriebe 32 angeordnet. Das Winkelgetriebe 32 weist eine im wesentlichen vertikal verlaufende Abtriebswelle 50 auf, an deren nach unten gerichtetem Ende eine Scheibe 47 angeordnet ist. Die Scheibe 47 weist eine zentrale Nabe 48 auf, die der Verbindung mit der Abtriebswelle 50 dient. An der der Abtriebswelle 50 abgewandten Seite der Scheibe 47 weist diese in exzentrischer Anordnung einen Kurbelzapfen 43 auf, der als Achse für ein darauf angeordnetes Wälzlager 44 dient. Die äußere Umfangsfläche 45 dieses Wälzlagers 44 kann hierbei ballig sein.

Ein in Vorschubrichtung vorderer Eggenbalken 40 weist ein auf ihm befestigtes Zwischenelement 38 mit der Höhe 39 auf, auf welchem ein U-Profil 35 mit seiner längsgerichteten Symmetrieebene parallel zur Vorschubrichtung und rechtwinklig zur Abtriebswelle 50 liegend befestigt ist. Die Seitenflansche dieses U-Profils dienen als Führungsflansche 41 und 42 für das auf dem Kurbelzapfen 43 angeordnete Wälzlager 44. Die Höhenlage dieses U-Profils ist über das Zwischenelement 38 so gewählt, daß bei normalem Betrieb der bearbeitete Erdboden nicht in das U-Profil eindringt. Bei schwerem Betrieb kann jedoch Erdreich in das U-Profil eindringen, was jedoch unschädlich ist, weil dieser Schmutz über den Kurbelzapfen 43 bzw. über das sich in dem U-Profil hin- und herbewegende Wälzlager 44 durch die offenen Stirnseiten 36 und 37 wieder ausgeschoben werden kann. Bei dieser Anordnung bildet also die Abtriebswelle 50 zusammen mit der Scheibe 47 und dem Kurbelzapfen 43, ggfls. noch zusammen mit dem Wälzlager 44 die Kurbel 46, die vom Antrieb der Antriebseinrichtung 30 über das Winkelgetriebe 32 angetrieben wird, so daß in der Gesamtheit dieser Elemente der Schwingantrieb 49 entsteht. Hierbei kann die Antriebseinrichtung im wesentlichen in der Richtung des Pfeiles 52 verfahren werden, wobei vom Schwingantrieb 49 die Eggenbalken 40 und 40' in eine Bewegung in Richtung des Pfeils 51 versetzt werden. Hierdurch können die Eggenzähne 53 in an sich bekannter Weise das Erdreich bearbeiten.

Die beschriebene Antriebseinrichtung ist natürlich nicht nur für Doppeleggen verwendbar, sondern ebenso für Einzeleggen, und es kann der Winkel zwischen Eingangswelle und Abtriebswelle auch z. B. größer als 90° sein.

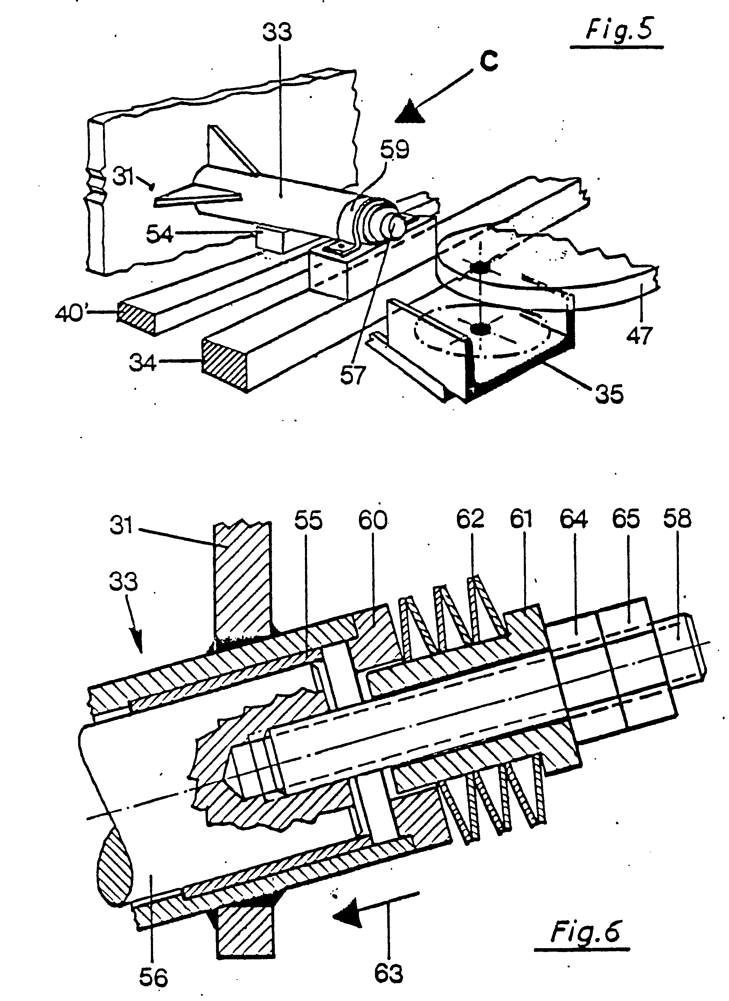

Es ist vorteilhaft, wenn der stationäre Querträger 34 und damit die gesamte Egge, eine Pendelbewegung ausführen kann, um sich den Bodenunebenheiten leichter anzupassen. Es müssen dann nicht mehr sämtliche Stöße von der jeweiligen Antriebseinrichtung aufgenommen werden. Der Betrieb wird hierdurch ruhiger. Um dies zu erreichen, ist der Ausleger 33 als Führungsrohr ausgebildet, welches in der Adapterplatte 31 befestigt ist. Im Führungsrohr selbst können dann Führungsbüchsen 55 vorgesehen sein, in welchen eine Welle 56 drehbar und axial verschiebbar gelagert ist. Am freien Ende 57 ist die Welle 56 in geeigneter Weise mit dem stationären Querträger 34 verbunden. Das andere Ende ist mit einem Gewindestift 58 versehen. Der Gewindestift 58 ragt durch einen Abschlußflansch 60 und durch eine darin gleitend geführte Flanschbüchse 61 hindurch und ist außen mit zwei Kontermuttern 64 und 65 versehen. Die Kontermuttern 64 und 65 liegen außen am Flansch der Flanschbüchse 61 an. Zwischen der Innenseite des Flansches der Flanschbüchse 61 und der Außenseite des Abschlußflansches 60 sind Federelemente 62 in Form eines Tellerfederpaketes vorgesehen. Durch Anschrauben der Kontermuttern 64 und 65 läßt sich das Tellerfederpaket mit den Federelementen 62 vorspannen. Eine Axialbewegung der Welle 56 in Richtung des Pfeils 63 muß dann unter der Vorlast der Federelemente 62 erfolgen. Im Ausführungsbeispiel nach den Figuren 5 und 6 wird in stationärem Zustand die Gegenkraft zu der von den Federelementen 62 ausgeübten Axialkraft über den Anschlag 59 der Welle 56 in den als Führungsrohr ausgebildeten Ausleger 33 eingeleitet. An der äußeren Umfangsfläche des Auslegers 33 ist, etwa in der Form eines Querbalkens, ein Anschlag 54 vorgesehen, der die Pendelbewegung der gesamten Egge, beispielsweise durch Anschlag an den Eggenbalken 40', auf das gewünschte Maß begrenzt. Eine solche Pendelbegrenzung ist sehr robust und kann von dem rauhen Arbeitsbetrieb solcher Geräte nicht zerstört werden. Evtl. auftretende Axialkräfte, die von der Antriebskurbel in das U-Profil 35, z. B. über Reibung, eingeleitet werden, können von der Vorspannung der Federelemente 62 aufgenommen werden. In Richtung des Pfeiles 63 ist bei Überlast dann sogar ein Nachgeben durch weiteres Zusammendrücken der Federelemente 62 möglich. Es ist auch denkbar, ein solches Paket von Federelementen 62 beidseitig vorzusehen, so daß die Welle 56 schwimmend zwischen zwei vorgespannten Federpaketen gehalten ist. Es ist dann ein Nachgeben in alle Richtungen bei Auftreten von Überlast möglich. Die beschriebene Form der Lagerung und Aufhängung der Egge sorgt dafür, daß die Pendelbegrenzung und die Aufnahme evtl. auftretender Axialkräfte von unterschiedlichen Baugruppen bewirkt wird. Eine Zerstörung durch kombiniert auftretende und sich damit vergrößernde Kräfte kann damit verhindert werden.

Liste der verwendeten Bezugszeichen

| | |
|---|---|
| 1 - 28 | unbenutzt |
| 29 | paralleler Hebel |
| 30 | Antriebseinrichtung |
| 31 | Adapterplatte |
| 32 | Winkelgetriebe |
| 33 | Ausleger |
| 34 | stationärer Querträger |
| 35 | U-Profil |
| 36 | Stirnseite |
| 37 | Stirnseite |
| 38 | Zwischenelement |
| 39 | Höhe |
| 40 | Eggenbalken |
| 40' | Eggenbalken |
| 41 | Führungsflansch |
| 42 | Führungsflansch |
| 43 | Kurbelzapfen |
| 44 | Wälzlager |
| 45 | äußere Umfangfläche |
| 46 | Kurbel |
| 47 | Scheibe |
| 48 | zentrale Nabe |
| 49 | Schwingantrieb |
| 50 | Abtriebswelle |
| 51 | Hauptrichtung der Schwingbewegung |
| 52 | Hauptrichtung der Fahrbewegung |
| 53 | Eggenzähne |
| 54 | Anschlag |
| 55 | Führungsbüchse |
| 56 | Welle |

| 57 | freies Ende |
|---|---|
| 58 | Gewindestift |
| 59 | Anschlag |
| 60 | Abschlußflansch |
| 61 | Flanschbüchse |
| 62 | Federelemente |
| 63 | Richtung |
| 64 | Kontermutter |
| 65 | Kontermutter |

**Patentansprüche**

1. Eggenantrieb für eine mit einer fahrbaren einachsigen Antriebseinrichtung (30) verbundenen Egge, welche im wesentlichen aus einem stationären Querträger (34) und einem, im wesentlichen parallel zum Querträger gerichteten, quer zur Fortbewegungsrichtung der Egge hin und her <u>beweglichen, angetriebenen</u> und mit Eggenzähnen (53) ausgerüsteten Eggenbalken (40) besteht, wobei der Eggenbalken mit dem Querträger mittels mindestens zwei parallelen Hebeln schwingbar verbunden ist und wobei der Eggenbalken Mittel zur Kopplung mit einem Abtriebselement eines Schwingantriebes (49) aufweist zur Erzeugung einer im wesentlichen quer zur Fortbewegungsrichtung verlaufenden Hin- und Herbewegung des Eggenbalkens, dadurch gekennzeichnet, daß der Schwingantrieb (49) als an sich bekanntes Winkelgetriebe (32) ausgebildet ist, dessen Eingangswelle von der Antriebseinrichtung (30) angetrieben ist und dessen Abtriebswelle (50) mindestens angenähert senkrecht zur Hauptrichtung (51) der Schwingbewegung und der Fahrbewegung (52) angeordnet ist und eine Kurbel (46) aufweist, deren Kurbelzapfen (43) zwischen zwei parallelen, sich in Fahrtrichtung (52) erstreckenden Führungsflanschen (41, 42) zur Umwandlung der Drehbewegung des Kurbelzapfens (43) in eine Hin- und Herbewegung angeordnet ist, wobei diese Führungsflansche (41, 42) direkt oder über Zwischenelemente (38) an einem Eggenbalken (40) befestigt sind.

2. Einrichtung nach Anspruch 1, dadurch gekennzeichnet, daß die Kurbel (46) als Scheibe (47) mit zentrischer Nabe (48) und exzentrischem Kurbelzapfen (43) ausgebildet ist.

3. Einrichtung nach mindestens einem der Ansprüche 1 und 2, dadurch gekennzeichnet, daß auf dem Kurbelzapfen (43) ein Wälzlager (44) angeordnet ist, dessen äußere Umfangsfläche (45) mit den Führungsflanschen (41, 42) zusammenarbeitet.

4. Einrichtung nach mindestens einem der Ansprüche 1 bis 3, dadurch gekennzeichnet, daß die Führungsflansche (41, 42) von den Schenkeln eines U-Profils (35) gebildet werden, welches direkt oder über Zwischenelemente (38) an einem Eggenbalken (40) befestigt ist.

5. Einrichtung nach mindestens einem der Ansprüche 1 bis 4, dadurch gekennzeichnet, daß das U-Profil (35) über Zwischenelemente (38) in seiner Höhenlage (39) so auf einem Eggenbalken (40) befestigt ist, daß mindestens bei normalem Eggenbetrieb das U-Profil (35) oberhalb des bewegten Erdreichs liegt.

6. Einrichtung nach mindestens einem der Ansprüche 1 bis 5, dadurch gekennzeichnet, daß das U-Profil (35) an beiden Stirnseiten (36, 37) offen ist.

7. Einrichtung nach mindestens einem der Ansprüche 1 bis 6, dadurch gekennzeichnet, daß an der Antriebseinrichtung eine Adapterplatte (31) befestigt ist, auf der einerseits das Winkelgetriebe (32) in Wirkverbindung mit der Antriebseinrichtung (30) und andererseits ein Ausleger (33) zur Befestigung des stationären Querträgers (34) angeordnet ist.

8. Einrichtung nach mindestens einem der Ansprüche 1 bis 7, dadurch gekennzeichnet, daß ein Winkelgetriebe vorgesehen ist, bei dem Eingangswelle und Abtriebswelle (50) einen von 90° abweichenden Winkel miteinander bilden.

9. Einrichtung nach mindestens einem der Ansprüche 1 bis 8, dadurch gekennzeichnet, daß die Führungsflansche (41, 42) in ihrer Lage parallel zur Vorschubrichtung (52) und rechtwinklig zur Abtriebswelle (50) angeordnet sind.

10. Einrichtung mindestens nach Anspruch 7, dadurch gekennzeichnet, daß der Ausleger (33) als Führungsrohr ausgebildet ist, in welchem eine mit einem freien Ende (57) am stationären Querträger (34) befestigte Welle (56) begrenzt drehbar und begrenzt axial verschiebbar gelagert ist, wobei eine Axialverschiebung in mindestens einer Richtung (63) gegen eine Vorlast erfolgt.

11. Einrichtung mindestens nach Anspruch 10, dadurch gekennzeichnet, daß zur Erzeugung der Vorlast Federelemente (62) vorgesehen sind.

12. Einrichtung mindestens nach Anspruch 10 oder 11, dadurch gekennzeichnet, daß die zweite Richtung einer Axialverschiebung durch einen Anschlag (59) auf der Welle (56) begrenzt wird.

13. Einrichtung nach einem der Ansprüche 1 bis 12, dadurch gekennzeichnet, daß ein weiterer Eggenbalken (40') auf der dem ersten Eggenbalken (40) gegenüberliegenden Seite des Querträgers (34) vorgesehen ist, der mit den genannten parallelen Hebeln (29), die entsprechend über den Querträger (34) hinausreichen, schwingbar verbunden ist, so daß die Schwingbewegung der Eggenbalken (40, 40') jeweils entgegengesetzt gerichtet ist.

**Claims**

1. Harrow drive for a harrow connected to a mobile single-axle drive device (30), the harrow essentially comprising a stationary cross-piece (34) and a harrow beam (40) which is fitted with harrow teeth (53), which is substantially parallel to the cross-piece and which is driven to be movable back and forth transversely to the direction of advancing movement of the harrow, wherein the harrow beam is pivotably connected to the cross-piece by means of at least two parallel levers, and wherein the harrow beam includes means to couple it to a driving element of an oscillatory drive (49) in order to produce a reciprocating movement of the harrow beam substantially transversely to the direction of advancing movement, characterised in that the oscillatory drive (49) comprises bevel-wheel gearing (32) known per se whose input shaft is driven from the drive device (30) and whose take-off shaft (50) is arranged at least approximately perpendicular to the main direction (51) of the oscillatory movement and of the travel movement (52), the take-off shaft including a crank (46) having a crank pin (43) which is arranged between two parallel guide flanges (41, 42) extending in the travel direction (52) for converting the rotary movement of the crank pin (43) into a reciprocating movement, with these guide flanges (41, 42) being secured directly or by way of intermediate elements (38) to a harrow beam (40).

2. Device according to claim 1, characterised in that the crank (46) is a disc (47) with a central hub (48) and an eccentric crank pin (43).

3. Device according to at least one of claims 1 and 2, characterised in that on the crank pin (43) is arranged a rolling bearing (44) whose external peripheral surface (45) cooperates with the guide flanges (41, 42).

4. Device according to at least one of claims 1 to 3, characterised in that the guide flanges (41, 42) are the legs of a U-shaped profile member (35) which is secured directly or by way of intermediate elements (38) to a harrow beam (40).

5. Device according to at least one of claims 1 to 4, characterised in that the U-shaped profile member (35) is secured by means of intermediate elements (38) at such an elevation (39) on a harrow beam (40) that at least in normal operation of the harrow the U-shaped profile member (35) lies above the region of soil being moved.

6. Device according to at least one of claims 1 to 5, characterised in that the U-shaped profile member (35) is open at both front sides (36, 37).

7. Device according to at least one of claims 1 to 6, characterised in that an adapter plate (31) is secured to the drive device, and on which is arranged on the one hand the bevel-wheel gearing (32) in working communication with the drive device (30) and on the other hand a jib arm (33) to secure the stationary cross-piece (34).

8. Device according to at least one of claims 1 to 7, characterised in that a bevel-wheel gearing is provided in which the input shaft and take-off shaft (50) form an angle other than 90° with each other.

9. Device according to at least one of claims 1 to 8, characterised in that the guide flanges (41, 42) are arranged in positions parallel to the feed direction (52) and perpendicular to the take-off shaft (50).

10. Device at least according to claim 7, characterised in that the jib arm (33) is formed as a guide tube in which a shaft (56) which is secured at one free end (57) to the stationary cross-piece (34) is mounted for limited rotational movement and limited axial displacement, with an axial displacement being effected in at least one direction (63) in opposition to an initial loading.

11. Device at least according to claim 10, characterised in that spring elements (62) are provided to create the initial loading.

12. Device at least according to claim 10 or 11, characterised in that the second direction of an axial displacement is limited by a stop (59) on the shaft (56).

13. Device according to one of claims 1 to 12, characterised in that a further harrow beam (40') is provided on the side of the cross-piece (34) opposite to the first harrow beam (40), said further harrow beam being pivotably connected to the said parallel levers (29) which project correspondingly beyond the cross-piece (34), so that the oscillatory movement of he harrow beams (40, 40') is in respective opposite directions.

**Revendications**

1. Entraînement de herse pour une herse reliée à un dispositif d'entraînement à deux roues (30), laquelle est essentiellement constituée par une traverse fixe (34) et par une poutre de herse (40), orientée dans une direction sensiblement parallèle à la traverse, animée d'un mouvement alternatif transversal à la direction de déplacement de la herse et équipée de dents de herse (53), cette poutre de herse étant reliée avec une liberté d'oscillation à la traverse au moyen d'au moins deux leviers parallèles, la poutre de herse présentant en outre un moyen d'accouplement à un élément de sortie d'un entraînement oscillant (49) pour la création d'un mouvement alternatif de la poutre de herse, de direction sensiblement transversale à ladite direction de déplacement, caractérisé en ce que l'entraînement oscillant (49) est constitué par un engrenage conique (32), en soi connu, dont l'arbre d'entrée est entraîné par le dispositif d'entraînement (30) et dont l'arbre de sortie (50) est disposé, au moins de manière approximative, perpendiculairement à la direction principale (51) du mouvement oscillant et du mouvement de translation (52) et présente une manivelle (46), dont le maneton (43) est disposé entre deux rebords de guidage parallèles (41, 42) s'étendant dans le sens de la marche (52), afin de transformer le mouvement de rotation du maneton (43) de la manivelle en un mouvement alternatif, ces rebords de guidage (41, 42) étant fixés à une poutre de herse (40), directement ou au moyen d'éléments intermédiaires (38).

2. Dispositif selon la revendication 1, caractérisé en ce que la manivelle (46) est constituée par un disque (47) comportant un moyeu central (48) et un maneton excentrique (43).

3. Dispositif selon l'une au moins des revendications 1 et 2, caractérisé en ce qu'il est disposé sur le maneton (43) un palier à roulements (44) dont la surface périphérique extérieure (45) coopère avec les rebords de guidage (41, 42).

4. Dispositif selon l'une au moins des revendications 1 à 3, caractérisé en ce que les rebords de guidage (41, 42) sont constitués par les branches d'un profilé en U (35) qui est fixé sur une poutre de herse (40), directement ou au moyen d'éléments intermédiaires (38).

5. Dispositif selon l'une au moins des revendications 1 à 4, caractérisé en ce que le profilé en U (35) est fixé dans sa position en hauteur (39) sur une poutre de herse (40) au moyen d'éléments intermediaires (38), de telle manière que le profilé en U (35) se trouve au moins, pour un service normal de la herse, au-dessus de la terre déplacée.

6. Dispositif selon l'une au moins des revendications 1 à 5, caractérisé en ce que le profilé en U (35) est ouvert sur ses deux faces frontales (36, 37).

7. Dispositif selon l'une au moins des revendications 1 à 6, caractérisé en ce qu'il est fixé sur le dispositif d'entraînement une plaque d'adaptation (31) sur laquelle sont disposés, d'une part, l'engrenage conique (32) en liaison active avec le dispositif d'entraînement (30) et, d'autre part, un bras (33) pour la fixation de la traverse fixe (34).

8. Dispositif selon l'une au moins des revendications 1 à 7, caractérisé en ce qu'il est prévu un engrenage conique, grâce auquel l'arbre d'entrée et l'arbre de sortie (50) forment entre eux un angle s'écartant de 90°.

9. Dispositif selon l'une au moins des revendications 1 à 8, caractérisé en ce que les rebords de guidage (41, 42) sont disposés suivant des positions parallèles à la direction d'avance (52) et formant un angle droit avec l'arbre de sortie (50).

10. Dispositif selon au moins la revendication 7, caractérisé en ce que le bras (33) est constitué sous forme d'un tube de guidage, dans lequel est monté, avec une liberté de rotation limitée et une mobilité axiale limitée, un arbre (56) fixé par une extrémité libre (57) à la traverse fixe (34), un déplacement axial ayant lieu au moins dans une direction (63), à l'encontre d'une précharge.

11. Dispositif selon au moins la revendication 10, caractérisé en ce qu'il est prévu des éléments élastiques (62) pour établir la précharge.

12. Dispositif selon au moins la revendication 10 ou 11, caractérisé en ce que la deuxième direction d'un déplacement axial est limitée par une butée (59) sur l'arbre (56).

13. Dispositif selon l'une des revendications 1 à 12, caractérisé en ce que, sur la face de la traverse (34) située à l'opposée de de la première poutre de herse (40), se trouve une autre poutre de herse (40'), qui est reliée avec une liberté d'oscillation aux leviers parallèles (29) susmentionnés, qui s'étendent en conséquence au-delà de la traverse (34), de telle manière que les mouvements oscillants des poutres de herse (40, 40') soient respectivement dirigés en sens contraire.

Fig.1

Fig.3

A→

Fig.2

Fig.4

EP 0 142 721 B1

Fig.5

Fig.6

3